# EUROPÄISCHE PATENTSCHRIFT

(11) **EP 1 159 549 B1**
(45) Veröffentlichungstag und Bekanntmachung des Hinweises auf die Patenterteilung: **04.06.2003**
(21) Anmeldenummer: 00909202.4
(22) Anmeldetag: 18.02.2000
(51) Int. Cl.: F16H 7/12

(54) **SPANNEINRICHTUNG FÜR ZUGMITTEL**
TENSIONING DEVICE FOR TRACTION MEANS
DISPOSITIF TENDEUR POUR MOYEN D'ENTRAINEMENT

(30) Priorität: 11.03.1999 DE 19910828
(43) Veröffentlichungstag der Anmeldung: 05.12.2001
(73) Patentinhaber: INA-Schaeffler KG, 91074 Herzogenaurach (DE)
(72) Erfinder: STIEF, Hermann, D-90574 Rosstal/Buchschwabach (DE); MIKO, Josef, D-91448 Emskirchen (DE)
(86) Internationale Anmeldenummer: EP0001322
(87) Internationale Veröffentlichungsnummer: WO00053955

(56) Entgegenhaltungen:
- EP-A- 0 456 142
- CH-A- 681 910
- DE-C- 4 300 178
- US-A- 4 832 665

## Beschreibung

### Gebiet der Erfindung

Die vorliegende Erfindung betrifft eine Spanneinrichtung für Zugmittel, insbesondere Zahnriemen, wie sie beispielsweise in Zahnriementrieben von Kraftfahrzeugen eingesetzt werden. Die vorliegende Erfindung betrifft weiterhin ein Verfahren zur Inbetriebnahme einer insbesonderen vorgespannten Spanneinrichtung für ein Zugmitteltrieb.

### Hintergrund der Erfindung

Aus US 48 32 665-A beispielsweise ist eine Spanneinrichtung für Zahnriemen bekannt, bei der eine Spannrolle auf einem Exzenter drehbar gelagert ist. Der Exzenter ist schwenkbar auf einem Träger angeordnet, der an einen Motor mittels einer Schraube angeflanscht ist. Eine auf dem Exzenter angeordnete Schraubenfeder ist einerseits an dem Motor und andererseits an dem Exzenter derart abgestützt, daß der Exzenter mit der Spannrolle gegen den Zahnriemen angefedert wird. Bei dieser Spanneinrichtung ist ein Sicherungsstift vorgesehen, der die Spannfeder vor der Inbetriebnahme in einer vorgespannten Anordnung hält. Nach dem Anflanschen der Spanneinrichtung an den Motor wird der Sicherungsstift abgezogen, so daß der Exzenter unter der Kraft der Spannfeder gegen den Zahnriemen angefedert wird. Der Zahnriemen kann die Zahnriemenscheiben der Kurbelwelle und der Nockenwellen umschlingen. Es ist wichtig, daß ein Springen des Zahnriemens über die Zähne der Zahnriemenscheiben verhindert wird, da anderenfalls die Steuerzeiten in unerwünschter Weise geändert werden, so daß ein totaler Ausfall der Verbrennungskraftmaschine die Folge sein kann. Um ein Springen des Zahnriemens zu vermeiden, ist bei der Spanneinrichtung gemäß US 48 32 665-A zwischen dem erwähnten Bolzen und dem Exzenter ein Freilauf angeordnet. Wenn in dem Trum des Zahnriemens, mit dem die Spannrolle zusammenarbeitet, überhöhte Trumkräfte entstehen, wird der Exzenter entgegen der Kraft der Spannfeder verschwenkt. In dieser Richtung greift der Klemmrollenfreilauf, so daß eine unerwünscht hohe Auslenkung des Exzenters aus dem Riementrieb heraus verhindert wird. Sobald die überhöhte Trumkraft abgebaut ist, federt die Spannrolle gegen den Zahnriemen an, so daß die geforderte Spannung in dem Trum aufrechterhalten bleibt. Auf diese Weise wird ein Springen des Zahnriemens vermieden. Der Freilauf übernimmt hier demzufolge die Funktion eines Stoppers, der einen Schwenkwinkel des Spannarms begrenzt. Nachteilig bei dieser Spanneinrichtung ist jedoch der aufwendige Aufbau des Stoppers, der sowohl den Freilauf als auch eine Dämpfungsflüssigkeit benötigt, um ein Nachgeben des Exzenters aus dem Riementrieb heraus zu ermöglichen.

Aus DE 40 15 028 A1 ist ein sogenannter Doppelexzenterspanner bekannt, der einen Einstellexzenter und einen Arbeitsexzenter umfaßt. Beim Einbau an den Motorblock wird die Spannvorrichtung mit einem durch eine exzentrisch angeordnete Befestigungsbohrung hindurchgeführten Bolzen zunächst lose verschraubt. Mit einem in einen Innensechskant eingesetzten Verstellwerkzeug wird die Spannvorrichtung gegen den Riemen geschwenkt. Wenn sich dieser spannt, wirkt eine Reaktionskraft auf die Spannvorrichtung. Bei weiterem Schwenken spannt sich die Schraubenfeder und das Montageelement verschwenkt. Der Schwenkvorgang wird solange fortgesetzt, bis vorgesehene Kerben an dem Flansch und einer Kunststoffscheibe sich decken. In dieser Situation befindet sich ein Vorsprung in der Mitte einer Ausnehmung des Schwenkbereichs des Spannarms. In dieser Voreinstellung wird der Bolzen festgeschraubt. Diese Doppelexzenterspanner sind dann nachteilig, wenn der Einstellexzenter für die Voreinstellung zu weit verschwenkt wird, also die eine Kerbe an der anderen Kebe vorbeiwandert. Wenn nun der Einstellexzenter zurückgeschwenkt wird bis die beiden Kerben miteinander fluchten, befindet sich der Vorsprung nicht länger in der Mitte der genannten Ausnehmung, sondern etwas versetzt davon. Grund für diese Versetzung ist eine innere Reibung, die zwischen den Maschinenteilen während der Voreinstellung auftritt. In diesem Fall hat der Stopper, der durch den Vorsprung und die Ausnehmung gebildet ist, eine andere Position, so daß der Schwenkbereich des Spannarms verändert ist. Es findet ein Hysterese-Effekt statt. In der Praxis kann dies zu erheblichen Problemen führen, da erstens die Trumkräfte von ihren vorbestimmten Werten abweichen und weil zweitens der Schwenkbereich nicht mehr auf das Verhalten des Zugmitteltriebs abgestimmt ist.

Aus gattungsbildender DE 4300 178 C1 ist eine Riemenspannvorrichtung bekannt geworden, mit einem Spannarm, auf dem eine Spannrolle drehbar angeordnet ist. Der Spannarm ist auf einer Achse schwenkbar angeordnet, wobei eine Unterlegscheibe formschlüssig mit der Achse verbunden ist und in axialer Richtung an einem Schraubenkopf einer Schraube abgestützt ist, die in eine Sacklochbohrung an einer Stirnseite der Achse ausgebildet ist. Diese Achse wiederum ist über eine weitere Schraube an einem gestellfesten Teil festlegbar. Die Unterlegscheibe weist eine Nase auf, die in eine Ausnehmung des Spannarms eingreift, wobei diese Ausnehmung in Form eines Bogenstücks konzentrisch zur Achse ausgebildet ist. Ferner wird durch eine in der Unterlegscheibe vorgesehene Aussparung möglich, den Spannhebel, welcher eine Bohrung aufweist, mit Hilfe der Einführung eines Stiftes durch die Aussparung der Unterlegscheibe in die Bohrung des Spannhebels in einer vorgespannte Position zu arretieren. Wenn man den Stift herauszieht, ist ein Schwenken des Spannarms bezüglich der Achse möglich, bis die Nase der Unterlegscheibe in Umfangsrichtung gegen die Enden der bogenförmigen Ausnehmung anschlagen.

### Zusammenfassung der Erfindung

Aufgabe der vorliegenden Erfindung ist es daher, eine Spanneinrichtung anzugeben, die einfach aufgebaut und deren Inbetriebnahme zuverlässig möglich ist.

Mit der Erfindung wird eine Spanneinrichtung für Zugmittel, insbesondere Zahnriemen gemäß Patentanspruch 1 vorgeschlagen.

Bei dieser erfindungsgemäßen Spanneinrichtung können zusätzliche Maschinenelemente, wie beispielsweise Freiläufe, entfallen. Weiterhin ist sichergestellt, daß eine etwa auftretende innere Reibung zwischen zu verstellenden Bauteilen keinen Einfluß auf die einwandfreie Position des Stoppers hat, denn wegen der Arretierung findet während der Montage keine Relativbewegung zwischen Spannarm und dem Stopper statt. Wenn die Spanneinrichtung im Zahnriementrieb eingebaut ist, kann die Spannfeder den Spannarm gegen den Zahnriemen drücken, wobei der Spannarm gemeinsam mit dem Stopper verschwenkt. Diese Schwenkbewegung ist dann beendet, wenn ein Kräftegleichgewicht zwischen Trumkraft, Reibkraft und Spannfederkraft eingestellt ist. In dieser Situation wird der Stopper festgesetzt, und die beschriebene Arretierung wird aufgehoben, so daß ein weiteres betriebsbedingtes Schwenken des Spannarms unabhängig von dem Stopper erfolgt. Die Lage des Stoppers ist nun auf den Zahnriementrieb abgestimmt. Fehleinstellungen, insbesondere durch Hysterese-Effekt, sind ausgeschlossen, weil der Stopper nur in Richtung auf den Riemen verschwenkt wird und weil der Stopper gemeinsam mit dem Spannarm verschoben wird.

Der Spannarm ist gemäß Patentanspruch 1 auf einem Träger schwenkbar angeordnet ist, wobei eine Spannfeder einerseits an dem Träger und andererseits an dem Spannarm abgestützt ist. Diese Anordnung ermöglicht ein Vorspannen der Spannfeder. Wenn der Spannarm, der Stopper und der Träger mittels der Arretiereinrichtung miteinander arretierbar sind, ergeben sich die folgenden Vorteile: Erstens kann die Arretierung in einer Anordnung erfolgen, in der die Spannfeder vorgespannt ist und zweitens kann bereits ein definierter Winkel zwischen Stopper und Spannarm voreingestellt werden. Dadurch, dass die Scheibe relativ zum Träger drehbar und daran festsetzbar ist, wird eine eindeutige Positionierung des Stoppers bei der Montage der Spanneinrichtung erreicht.

Der Spannarm und der Stopper können beide jeweils mit wenigstens einer Anlage versehen sein, die zum Anschlagen aneinander vorgesehen sind, wobei die Anlagen voneinander beabstandet sind, wenn der Spannarm und der Stopper miteinander arretiert sind. Dieser Abstand ist gerade so bemessen, daß nach Inbetriebnahme der Spanneinrichtung der Schwenkwinkel des Spannarms aus seiner Mittelstellung -die zumindest weitgehend mit der Stellung nach Abschluß der Montage übereinstimmt- heraus und entgegen der Spannkraft der Spannfeder auf den Zahnriementrieb abgestimmt ist. Wenn demzufolge überhöhte Trumkräfte ein starkes Auslenken des Spannarms entgegen der Federkraft der Spannfeder zur Folge haben, wird diese Auslenkung rechtzeitig durch den Stopper bzw. durch das Aneinanderschlagen der Anlagen gestoppt. Sobald die Trumkräfte abgebaut sind, federt der Spannarm unter der Federkraft der Spannfeder unverzüglich gegen den Zahnriemen, so daß ein Springen des Zahnriemens zuverlässig verhindert ist.

Eine besonders einfache Arretiereinrichtung sieht einen Stift vor, der zum Arretieren in Öffnungen der zu arretierenden Teile eingreift, wobei der Stift außer Eingriff mit den Öffnungen bringbar ist. Im einfachsten Fall können der Spannarm, der Stopper und der Träger jeweils mit einer Bohrung versehen sein, die miteinander fluchten, wobei der Stift durch diese Bohrung hindurchgeführt ist. Wenn die Spanneinrichtung im Zahnriementrieb eingebaut ist, braucht lediglich der Stift zunächst aus dem Träger gezogen, der Stopper festgesetzt und anschließend der Stift vollständig gezogen zu werden, so daß die Inbetriebnahme der erfindungsgemäßen Spanneinrichtung ohne weitere Schritte erfolgen kann.

Der Träger kann eine Grundplatte umfassen, die mit einem Bolzen versehen ist, auf dem der Spannarm schwenkbar angeordnet ist. Eine derartige Anordnung ist vorzugsweise dann zweckmäßig, wenn die Grundplatte an die Kontur der Flanschfläche des Motors angepaßt sein soll. Der Bolzen und die Grundplatte sind vorzugsweise fest miteinander verbunden.

Der bereits erwähnte Stopper kann in besonders einfacher Art und Weise durch die gegenüber dem Bolzen drehbare Scheibe gebildet sein, die vorzugsweise reibschlüssig an den Bolzen festlegbar ist. Die Fähigkeit der Scheibe gegenüber dem Bolzen drehbar zu sein, ist erforderlich, um zu gewährleisten, daß der Spannarm und die Scheibe gemeinsam soweit verschwenken können, bis das Kräftegleichgewicht zwischen Trumkraft und Spannfederkraft eingestellt ist. Danach kann die Scheibe reibschlüssig an dem Bolzen festgelegt werden.

Bei dieser Anordnung kann die Spannfeder durch eine Schraubendrehfeder gebildet sein, die auf dem Bolzen angeordnet ist; die Schraubenfeder ist dann einerseits an dem Träger und andererseits an dem als Exzenter ausgebildeten Spannarm abgestützt.

Bei einer bevorzugten erfindungsgemäßen Weiterbildung sieht die Arretiereinrichtung einen Stift vor, der in Öffnungen der Scheibe und des Exzenters und des Trägers eingreift. Bei dieser Spanneinrichtung ist die Lage der Scheibe gegenüber dem Exzenter infolge der Arretierung festgelegt, wobei außerdem die Schraubenfeder vorgespannt sein kann; denn die Schraubenfeder ist einerseits an dem Träger und andererseits an dem Exzenter abgestützt und da diese beiden Teile mittels des Stiftes arretiert sind, kann die Schraubenfeder nicht entspannen.

Das bereits erwähnte Festsetzen der Scheibe an dem Bolzen geschieht vorzugsweise mittels einer Schraube, die in eine in dem Bolzen vorgesehene Bohrung eingreift, wobei die Scheibe bei angezogener Schraube an dem Bolzen angedrückt und reibschlüssig mit diesem verbunden ist.

Diese Spanneinrichtung läßt sich in vorteilhafter Weise dadurch weiterbilden, daß die Schraube durch die als zentrale Längsbohrung ausgeführte Bohrung hindurchgeführt und mit einem gestellfesten Maschinenteil, insbesondere dem Motorblock, verschraubt ist. Demzufolge dient diese Schraube einem doppelten Zweck, nämlich erstens die Spanneinrichtung an dem Motorblock festzusetzen und zweitens die Scheibe an dem Bolzen festzusetzen.

Die beschriebene Spanneinrichtung kann sich in besonders günstiger Weise für das nachfolgende Verfahren zur Inbetriebnahme der Spanneinrichtung eignen. Die für dieses nachfolgend beschriebene Verfahren vorgesehene Spanneinrichtung weist die folgenden Merkmale auf: Einen Spannarm, auf dem eine Spannrolle drehbar gelagert ist; einen Träger, auf dem der Spannarm schwenkbar angeordnet ist; eine Spannfeder, die einerseits an dem Träger und andererseits an dem Spannarm abgestützt ist; einen Stopper, der einen Schwenkwinkel des Spannarms begrenzt; eine lösbare Arretiereinrichtung, mittels der der Spannarm und der Träger und der Stopper miteinander arretierbar sind. Das Verfahren sieht die folgenden Schritte vor: Arretieren des Spannarms und des Trägers miteinander in einer Anordung, in der die Spannfeder vorgespannt ist. Diese so vormontierte Spanneinrichtung wird in den Zugmitteltrieb eingebaut und der Riemen wird auf die Spannrolle aufgelegt. Danach wird die beschriebene Arretierung teilweise derart aufgehoben, daß lediglich der Stopper und der Spannarm mittels der Arretiereinrichtung arretiert bleiben, wobei unter der Kraft der vorgespannten Spannfeder der Spannarm gemeinsam mit dem Stopper gegen das Zugmittel anfedert. Nun wird der Stopper festgesetzt. Im Anschluß daran wird die Arretierung vollständig aufgehoben, so daß der Spannarm relativ zu dem Stopper schwenkbeweglich ist. Der Stopper hat nun eine optimale Lage. Der nun vorhandene Schwenkwinkel des Spannarms bis zum Anschlagen an den Stopper ist von seinem Betrag her annähernd groß wie bei der vormontierten Spanneinrichtung: denn bei der vormontierten Spanneinrichtung ist dieser Schwenkwinkel durch die Arretierung von Spannarm und Stopper miteinander festgelegt, wobei der Stopper nach gemeinsamen Verschwenken von Spannarm und Stopper festgesetzt wird.

### Kurze Beschreibung der Zeichnungen

Nachstehend wird die Erfindung anhand eines in insgesamt drei Figuren dargestellten Ausführungsbeispieles näher erläutert. Es zeigen:
- Figur 1: einen Längsschnitt durch eine erfindungsgemäße Spanneinrichtung;
- Figur 2: eine Ansicht der Spanneinrichtung aus Figur 1 von links und
- Figur 3: eine Ansicht der Spanneinrichtung aus Figur 1 von rechts.

### Ausführliche Beschreibung der Zeichnungen

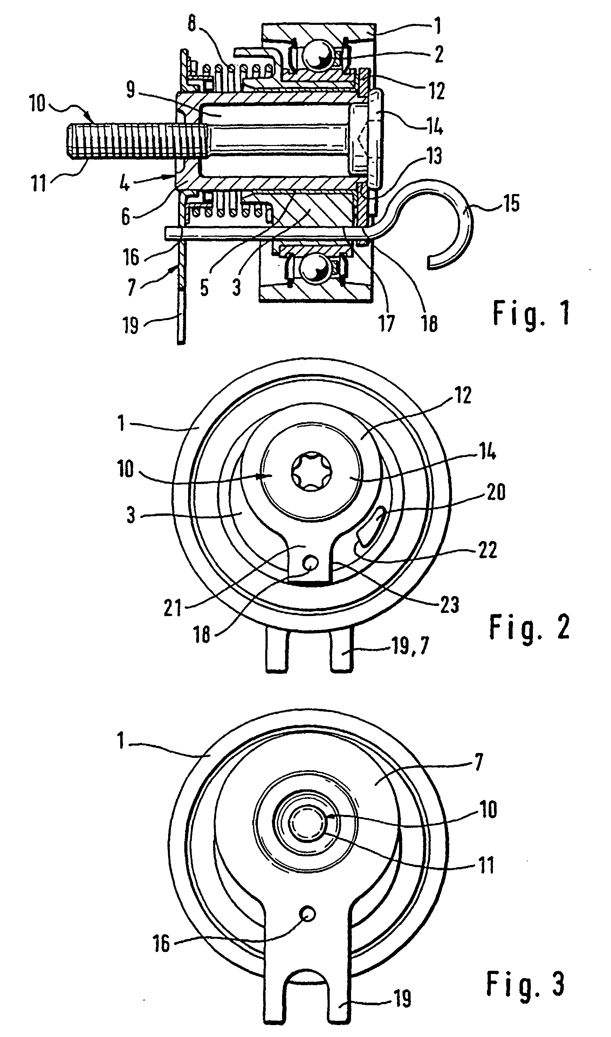

Bei der erfindungsgemäßen Spanneinrichtung nach Figur 1 ist eine Spannrolle 1 über eine Kugellagerung 2 auf einem Exzenter 3 drehbar gelagert. Der Exzenter 3 ist auf einem Träger 4 unter Zwischenschaltung eines Gleitlagers 5 schwenkbar gelagert. Der Träger 4 umfaßt einen zylindrischen Bolzen 6 und eine Grundplatte 7, die an einem Ende des Bolzens 6 angeordnet und fest mit diesen verbunden ist. Die Grundplatte 7 dient zur Anlage an und zur VerdrehSicherung der Spanneinrichtung gegenüber einem nicht dargestellten Motorblock einer Verbrennungskraftmaschine.

Weiterhin ist eine Schraubendrehfeder 8 vorgesehen, die einerseits an der Grundplatte 7 abgestützt ist und die andererseits an dem Exzenter 3 eingreift.

Der Bolzen 6 ist mit einer zentralen Längsbohrung 9 versehen, durch die eine Schraube 10 hindurchgeführt ist. Die Schraube 10 greift mit ihrem Gewindeabschnitt 11 in eine nicht dargestellte Gewindebohrung des Motorblocks ein. An dem anderen Ende des Bolzens 6 ist eine Scheibe 12 auf einem Absatz 13 des Bolzens 6 drehbar angeordnet. Die Scheibe 12 steht axial etwas vor, so daß sie zwischen einem Schraubenkopf 14 der Schraube 10 und dem Bolzen 6 eingespannt werden kann, wenn die Schraube 10 angezogen ist. Die Einspannung bewirkt, daß die Scheibe 12 reibschlüssig mit dem Bolzen 6 verbunden ist.

Femer ist ein Stift 15 vorgesehen, der die Scheibe 12, den Exzenter 3 und den Träger 4 miteinander arretiert. Zu diesem Zweck weisen die Grundplatte 7 des Trägers 4, der Exzenter 3 und die Scheibe 12 jeweils eine Bohrung 16, 17, 18 auf, durch die der Stift 15 hindurchgeführt ist. In der gezeigten Darstellung ist die Schraubendrehfeder 8 vorgespannt.

Der Figur 2 ist zu entnehmen, daß die Grundplatte 7 ein gabelförmiges Ende 19 aufweist, das zum Eingriff mit dem nicht dargestellten Motorblock vorgesehen ist. Weiterhin ist dieser Darstellung zu entnehmen, daß der Exzenter 3 mit einem erhabenen Vorsprung 20 versehen ist, der die Scheibe 12 wenigstens teilsweise in axialer Richtung überlappt. Die Scheibe 12 weist ferner einen radial gerichteten Steg 21 auf, der mit der Bohrung 18 für den Stift (der in dieser Darstellung nicht abgebildet ist) versehen ist. Der Steg 21 und der Vorsprung 20 weisen je eine Anlage 22, 23 auf, die zum Anschlagen aneinander vorgesehen sind. Nach der Inbetriebnahme der erfindungsgemäßen Spanneinrichtung wird ein Verschwenken des Exzenters 3 in Richtung auf die feststehende Scheibe 12 durch das Anschlagen der Anlagen 22, 23 begrenzt.

Der Figur 3 ist deutlich die Form der Grundplatte 7 zu entnehmen.

Nachstehend wird die Wirkungsweise der erfindungsgemäßen Spanneinrichtung erläutert. Die beschriebene, vormontierte und vorgespannte Spanneinrichtung wird in den Zahnriementrieb eingebaut, wobei die Schraube 12 soweit angezogen wird, daß die Scheibe 12 gegenüber dem Bolzen 6 noch drehbar ist. Nun wird der Stift 15 soweit axial bewegt, bis er die Bohrung 16 der Grundplatte 7 verlassen hat. In dieser Situation wird der Exzenter 3 gemeinsam mit der Scheibe 12 unter der Spannkraft der Schraubendrehfeder 8 gegen den nicht dargestellten Zahnriemen verschwenkt und an diesen angedrückt. Nach Beendigung dieses Schwenkvorganges wird die Schraube 10 fest angezogen, wobei die Scheibe 12 zwischen dem Schraubenkopf 14 und dem Bolzen 6 eingespannt wird. Nun ist die Scheibe 12 reibschlüssig mit dem Bolzen 6 verbunden. Nun wird der Stift 15 vollständig herausgezogen, und die erfindungsgemäße Spanneinrichtung ist betriebsbereit.

Nachstehend wird der Fall beschrieben, daß überhöhte Trumkräfte an der Spannrolle eingreifen. Unter dieser Trumkraft wird der Exzenter 3 entgegen der Federkraft der Schraubendrehfeder 8 verschwenkt, also aus dem Trieb heraus. Diese Schwenkbewegung wird jedoch dadurch begrenzt, daß schließlich der erhabene Vorsprung 20 mit seiner Anlage 22 an die Anlage 23 der Scheibe 12 anschlägt. Ein weiteres Verschwenken des Exzenters 3 ist nicht möglich. Dieser Schwenkweg ist so bemessen, daß ein Springen des Zahnriemens ausgeschlossen ist, denn wenn die überhöhten Druckkräfte abgebaut sind, kann der Exzenter unmittelbar unter der Kraft der Schraubendrehfeder 8 den Zahnriemen folgen, so daß kein Schlupf zwischen Zahnriemen und Zahnriemenscheibe eintreten kann.

Bei der beschriebenen Inbetriebnahme sind Montagefehler ausgeschlossen. Die Lage der Scheibe 12 ist eindeutig festgelegt. Die beschriebenen Vorteile ergeben sich ebenfalls bei einer abgewandelten erfindungsgemäßen Ausführungsform, die nachstehend beschrieben wird. Bei dieser abgewandelten Ausführungsform ist die Scheibe 12 drehfest mit dem Bolzen 6 verbunden. Die Scheibe 12 und der Bolzen 6 könnten auch einstückig miteinander verbunden sein. Demgegenüber ist bei der abgewandelten Ausführungsform die Grundplatte 7 gegenüber dem Bolzen 6 drehbar.

Bei der abgebildeten erfindungsgemäßen Spanneinrichtung kann die Schraube 10 an ihrem freien Ende mit einem Sicherungsring versehen sein, der einerseits an der Schraube und andererseits an dem Bolzen 6 abgestützt ist. Auf diese Weise ist die Schraube nicht nur verliersicher in dem Bolzen gehalten, sondern die Axialkraft der Schraubendrehfeder 8 wird über diesen Sicherungsring in die Schraube 10 eingeleitet.

### Bezugszeichen

- 1: Spannrolle
- 2: Kugellagerung
- 3: Exzenter
- 4: Träger
- 5: Gleitlager
- 6: Bolzen
- 7: Grundplatte
- 8: Schraubendrehfeder
- 9: Längsbohrung
- 10: Schraube
- 11: Gewindeabschnitt
- 12: Scheibe
- 13: Absatz
- 14: Schraubenkopf
- 15: Stift
- 16: Bohrung
- 17: Bohrung
- 18: Bohrung
- 19: gabelförmiges Ende
- 20: Vorsprung
- 21: Steg
- 22: Anlage
- 23: Anlage

## Patentansprüche

1. Spanneinrichtung für Zugmittel, insbesondere Zahnriemen, mit einem Spannarm (3), auf dem eine Spannrolle (1) drehbar angeordnet ist, und mit einem Stopper (12), der einen Schwenkwinkel des Spannarms (3) begrenzt, wobei eine lösbare Arretiereinrichtung (15) vorgesehen ist, mittels der der Spannarm (3) und der Stopper (12) zum gemeinsamen Verschwenken in eine für den Stopper (12) vorgesehene Position arretiert sind, wobei der Spannarm (3) auf einem Träger (4) schwenkbar angeordnet ist, wobei eine Spannfeder (8) einerseits an dem Träger (4) und andererseits an dem Spannarm (3) abgestützt ist, **dadurch gekennzeichnet, dass** der Stopper durch eine gegenüber dem Träger (4) drehbare Scheibe (12) gebildet ist, die,vorzugsweise reibschlüssig an dem Träger (4) festlegbar ist.

2. Spanneinrichtung nach Anspruch 1, bei der der Spannarm (3) und der Stopper (12) beide je mit wenigstens einer Anlage (22, 23) versehen sind, die zum Anschlagen aneinander vorgesehen sind, wobei die Anlagen (22, 23) der miteinander arretierten Spannarm (3) und Stopper (12) in Schwenkrichtung des Spannarms (3) voneinander beabstandet sind.

3. Spanneinrichtung nach Anspruch 1, bei der der Spannarm (3), der Stopper (12) und der Träger (4) mittels der Arretiereinrichtung (15) miteinander arretierbar sind.

4. Spanneinrichtung nach Anspruch 1, bei der die Arretiereinrichtung einen Stift (15) umfaßt, der zum Arretieren in Öffnungen (16, 17, 18) der zu arretierenden Teile (4, 12, 3) eingreift, wobei der Stift (15) außer Eingriff mit den Öffnungen (16, 17, 18) bringbar ist.

5. Spanneinrichtung nach Anspruch 1, bei der der Träger (4) eine Grundplatte (7) umfaßt, die mit einem Bolzen (6) versehen ist, auf dem der Spannarm (3) schwenkbar angeordnet ist.

6. Spanneinrichtung nach Anspruch 5, bei dem der Bolzen (6) und die Grundplatte (7) fest miteinander verbunden sind.

7. Spanneinrichtung nach Anspruch 6, bei der der Stopper durch eine gegenüber dem Bolzen (6) drehbare Scheibe (12) gebildet ist, die vorzugsweise reibschlüssig an dem Bolzen (6) festlegbar ist.

8. Spanneinrichtung nach Anspruch 7, bei der eine auf dem Bolzen (6) angeordnete Schraubendrehfeder (8) einerseits an dem Träger (4) und andererseits an dem als Exzenter (3) ausgebildeten Spannarm abgestützt ist.

9. Spanneinrichtung nach Anspruch 8, bei der die Arretiereinrichtung einen Stift umfaßt, der in Bohrungen (16, 17, 18) der Scheibe (12) und des Exzenters (3) und des Trägers (4) eingreift.

10. Spanneinrichtung nach Anspruch 8, bei der eine Schraube (10) in eine im Bolzen (6) vorgesehene Bohrung (9) eingreift, wobei die Scheibe (12) bei angezogener Schraube (10) an den Bolzen (6) angedrückt und reibschlüssig mit diesem verbunden ist.

11. Spanneinrichtung nach Anspruch 10, bei der die Schraube (10) durch die als zentrale Längsbohrung (9) ausgeführte Bohrung hindurchgeführt und mit einem gestellfesten Maschinenteil, insbesondere Motorblock, verschraubt ist.

12. Verfahren zur Inbetriebnahme einer insbesondere vorgespannten Spanneinrichtung für einen Zugmitteltrieb, - wobei die Spanneinrichtung aufweist:
- einen Spannarm (3), auf dem eine Spannrolle (1) drehbar gelagert ist,
- einen Träger (4), auf dem der Spannarm (3) schwenkbar angeordnet ist,
- eine Spannfeder (8), die einerseits an dem Träger (4) und andererseits an dem Spannarm (3) abgestützt ist,
- einen Stopper (12), der einen Schwenkwinkel des Spannarms (3) begrenzt und
- eine lösbare Arretiereinrichtung (15), mittels der der Spannarm (3) und der Träger (4) und der Stopper (12) miteinander arretierbar sind
nach den folgenden Schritten:
- Arretieren des Spannarms (3) und des Trägers (4) und des Stoppers (12) miteinander in einer Anordnung, in der die Spannfeder (8) vorgespannt ist,
- Einbau der Spanneinrichtung in den Zugmitteltrieb, **gekennzeichnet durch** die folgenden weiteren Shritten
- teilweise Aufhebung der Arretierung derart, daß lediglich der Stopper (12) und der Spannarm (3) mittels der Arretiereinrichtung (15) miteinander arretiert sind, wobei unter der Kraft der vorgespannten Spannfeder (8) der Spannarm (3) gegen das Zugmittel anfedert,
- festsetzen des Stoppers (12),
- vollständige Aufhebung der Arretierung derart, daß der Spannarm (3) relativ zu dem Stopper (12) schwenkbeweglich ist.

## Claims

1. Tensioning device for traction elements, particularly toothed belts, said device having a tension arm (3) on which a tension roller (1) is mounted for rotation, and a stopper (12) that limits an angle of pivot of the tension arm (3), there being provided a releasable locking device (15) by means of which the tension arm (3) and the stopper (12) are locked for pivoting together into a defined position of the stopper (12), the tension arm (3) being arranged for pivoting on a support (4), a tension spring ((8) being supported at one end on the support (4) and at the other end on the tension arm (3), **characterised in that** the stopper is constituted by a disc (12) that can rotate relative to the support (4) and can be fixed on the support (4), preferably by frictional engagement.

2. Tensioning device according to claim 1 in which the tension arm (3) and the stopper (12), each one is provided with at least one contact surface (22, 23) for abutting against each other, the contact surfaces (22, 23) being spaced from each other in pivoting direction of the tension arm (3) when the tension arm (3) and the stopper (12) are locked to each other.

3. Tensioning device according to claim 1, in which the tension arm (3), the stopper (12) and the support (4) can be locked to one another by means of the locking device (15).

4. Tensioning device according to claim 1, in which the locking device comprises a pin (15) that, for locking, engages into openings (16, 17, 18) of the parts (4, 12, 3) to be locked, it being possible to disengage the pin (15) from the openings (16, 17, 18).

5. Tensioning device according to claim 1, in which the support (4) comprises a base plate (7) that is provided with a bolt (6) on which the tension arm (3) is arranged for pivoting.

6. Tensioning device according to claim 5, in which the bolt (6) and the base plate (7) are firmly connected to each other.

7. Tensioning device according to claim 6, in which the stopper is constituted by a disc (12) that can rotate relative to the bolt (6) and can be fixed on the bolt (6), preferably by frictional engagement.

8. Tensioning device according to claim 7, in which a coil torsion spring (8) arranged on the bolt (6) is supported at one end on the support (4) and at the other end on the tension arm that is configured as an eccentric (3).

9. Tensioning device according to claim 8, in which the locking device comprises a pin that engages into bores (16, 17, 18) of the disc (12), of the eccentric (3) and of the support (4).

10. Tensioning device according to claim 8, in which a screw (10) engages into a bore (9) provided in the bolt (6), and when the screw (10) is tightened, the disc (12) is pressed against the bolt (6) and connected thereto by frictional engagement.

11. Tensioning device according to claim 10, in which the screw (10) is inserted through the bore that is made as a central longitudinal bore (9) and is screwed to a frame-mounted engine component, particularly the engine block.

12. Method of putting into operation a, particularly pre-stressed, tensioning device for a traction element, said tensioning device comprising:
- a tension arm (3) on which a tension roller (1) is mounted for rotation,
- a support (4) on which the tension arm (3) is arranged for pivoting,
- a tension spring (8) that is supported at one end on the support (4) and at the other end on the tension arm (3),
- a stopper (12) that limits an angle of pivot of the tension arm (3), and
- a releasable locking device (15) by means of which the tension arm (3), the support (4) and the stopper (12) can be locked to one another,
said method comprising the following steps:
- locking the tension arm (3), the support (4) and the stopper (12) to one another in an arrangement in which the tension spring (8) is pre-stressed,
- installing the tensioning device in the traction drive,
**characterised by** the following further steps:
- partial release of the locking so that only the stopper (12) and the tension arm (3) are locked to each other by the locking device (15), and the tension arm (3) bears resiliently against the traction element under the force of the pre-stressed tension spring (8),
- fixing the stopper (12),
- complete release of the locking so that the tension arm (3) can pivot relative to the stopper (12).

## Revendications

1. Dispositif de tension pour moyens d'entraînement, plus particulièrement pour courroies dentées, ledit dispositif comprenant un bras de tension (3) sur lequel est agencé mobile en rotation, un galet-tendeur (1), ledit dispositif de tension comprenant, en plus, un arrêt (12) qui limite un angle de pivotement du bras de tension (3), il étant prévu un dispositif débrayable d'arrêt (15) par l'intermédiaire duquel le bras de tension (3) et l'arrêt (12) sont verrouillés pour pivoter ensemble dans une position définie de l'arrêt (12), le bras de tension (3) étant agencé pivotant sur un support (4), et un ressort de tension (8) étant supporté d'un côté sur le support (4) et de l'autre côté sur le bras de tension (3), **caractérisé en ce que** l'arrêt est constitué d'un disque (12) qui peut tourner par rapport au support (4), et ledit disque (12) peut être immobilisé sur le support (4), de préférence, par engagement par frottement.

2. Dispositif de tension selon la revendication 1, dans lequel le bras de tension (3) et l'arrêt (12) comprennent, chacun, au moins une surface de contact (22, 23) pour buter, l'une contre l'autre, et, lorsque le bras de tension (3) et l'arrêt (12) sont verrouillés ensemble, les surfaces de contact (22, 23) sont à l'écart, l'une de l'autre, dans la direction de pivotement du bras de tension (3).

3. Dispositif de tension selon la revendication 1, dans lequel le bras de tension (3), l'arrêt (12) et le support (4) sont verrouillés ensemble par l'intermédiaire du dispositif d'arrêt (15).

4. Dispositif de tension selon la revendication 1, dans lequel le dispositif d'arrêt comprend une goupille (15) qui, pour faire le verrouillage, s'engage dans des ouvertures (16, 17, 18) des pièces à verrouiller, la goupille (15) pouvant être dégagée des ouvertures (16, 17, 18).

5. Dispositif de tension selon la revendication 1, dans lequel le support (4) comprend une plaque de base (7) qui est munie d'un goujon (6) sur lequel est agencé pivotant, le bras de tension (3).

6. Dispositif de tension selon la revendication 5, dans lequel le goujon (6) et la plaque de base (7) sont reliés fixement, l'un à l'autre.

7. Dispositif de tension selon la revendication 6, dans lequel l'arrêt est constitué d'un disque (12) qui peut tourner par rapport au goujon (6) et qui peut être immobilisé sur le goujon (6), de préférence, par engagement par frottement.

8. Dispositif de tension selon la revendication 7, dans lequel un ressort de torsion à boudin (8) qui est agencé sur le goujon (6) est supporté d'un côté sur le support (4) et de l'autre côté, sur le bras de tension qui est configuré sous la forme d'un excentrique (3).

9. Dispositif de tension selon la revendication 8, dans lequel le dispositif d'arrêt comprend une goupille qui s'engage dans des alésages (16, 17, 18) du disque (12), de l'excentrique (3) et du support (4).

10. Dispositif de tension selon la revendication 8, dans lequel une vis (10) s'engage dans un alésage (9) qui est prévu dans le goujon (6), et lorsque la vis (10) est serrée, le disque (12) est pressé contre le goujon (6) et est relié à celui-ci par engagement par frottement.

11. Dispositif de tension selon la revendication 10, dans lequel la vis (10) est insérée à travers l'alésage qui est configuré en alésage longitudinal central (9), et ladite vis (10) est vissée à un composant de moteur monté sur le bâti, en particulier, au bloc moteur.

12. Méthode de mise en service d'un dispositif de tension pour une commande par entraînement, ledit dispositif de tension étant, de préférence, précontraint, et comprenant:
- un bras de tension (3) sur lequel est monté mobile en rotation, un galet-tendeur (1),
- un support (4) sur lequel est agencé pivotant, le bras de tension (3),
- un ressort de tension (8) qui est supporté d'un côté sur le support (4) et de l'autre côté, sur le bras de tension (3),
- un arrêt (12) qui limite un angle de pivotement du bras de tension (3), et
- un dispositif débrayable d'arrêt (15) par l'intermédiaire duquel le bras de tension (3), le support (4) et l'arrêt (12) peuvent être verrouillés ensemble
selon les pas suivants:
- verrouiller ensemble le bras de tension (3), le support (4) et l'arrêt (12) dans un agencement où le ressort de tension (8) est précontraint,
- installer le dispositif de tension dans la commande par entraînement,
**caractérisé par** les pas additionnels qui suivent:
- annulation partielle du verrouillage de telle façon que seulement l'arrêt (12) et le bras de tension (3) sont verrouillés ensemble par le dispositif d'arrêt (15), et que, sous la force du ressort précontraint de tension (8), le bras de tension (3) s'appuie de manière élastique contre le moyen d'entraînement,
- immobilisation de l'arrêt (12),
- annulation complète du verrouillage de telle façon que le bras de tension (3) peut pivoter par rapport à l'arrêt (12).
